# EUROPEAN PATENT SPECIFICATION

(11) **EP 1 985 526 B1**
(45) Date of publication and mention of the grant of the patent: **17.11.2010**
(21) Application number: 08007916.3
(22) Date of filing: 24.04.2008
(51) Int. Cl.: B62D 13/02

(54) **Steering system**
Lenksystem
Système de direction

(30) Priority: 27.04.2007 NL 1033771; 19.07.2007 NL 1034161
(43) Date of publication of application: 29.10.2008
(73) Proprietor: Transport Industry Development Centre B.V., 5692 GA Son en Breugel (NL)
(72) Inventor: Van Genugten, Antonius Jacobus, 5298 VK Liempde (NL)
(74) Representative: Dorna, Peter

(56) References cited:
- EP-A- 0 079 088
- FR-A- 2 753 161
- US-A- 2 510 525

## Description

The present invention relates to a steering system for causing wheels of a towed vehicle to steer in dependence on the angular position between the towed vehicle and a towing vehicle which tows the towed vehicle, said steering system comprising an actuated cylinder means and an actuating cylinder means for actuating the actuated cylinder means, said actuated cylinder means being of the double-acting type and comprising a cylinder housing with two opposite cylinder chambers present therein, and comprising a piston rod which is mechanically connected to at least one steered wheel and which piston rod is reciprocatingly movable between a neutral position and an actuated position in dependence on pressures prevailing inside within the cylinder housing, said actuating cylinder means likewise being of the double-acting type and comprising a cylinder housing with a piston body present therein, which piston body is reciprocatingly movable between a neutral position and an actuating position in dependence on the angular position between the towed vehicle and the towing vehicle and which defines two opposite cylinder chambers, one cylinder chamber of the actuating cylinder means being in communication with one cylinder chamber of the actuated cylinder means and the other cylinder chamber of the actuating cylinder means being in communication with the other cylinder chamber of the actuated cylinder means, said actuating cylinder means being provided with a bypass line.

The firm of Tridec markets a steering system under the type designation TD steering system. Said system is a mechanical steering system which is used for causing wheels of a trailer to steer in dependence on the angle of the tractor relative to the trailer. A steering rod provided at the bottom side of the chassis of the trailer, which steering rod extends at least substantially in the longitudinal direction of the trailer, is used for the required transfer of the aforesaid angular position to a steering position for the steered wheels of the trailer.

For some types of trailers the presence of the aforesaid steering rod is objectionable, in particular because of the space it takes up. The object of the invention is to provide an alternative steering system which does not make use of a steering rod and which is characterised by the limited amount of space the components of the steering system take up.

A steering system of the kind referred to in the introduction is known from FR-A1-2 753 161. In the steering system disclosed in said application, a bypass line is incorporated in the hydraulic lines of the steering system. Said bypass line is used in the coupling procedure for coupling a towed vehicle to a towing vehicle. During said coupling procedure, the bypass line is opened, so that the two opposite chambers of the actuating cylinder wiii be in communication with each other independently of the position of the piston rod of the actuating cylinder. In this way the piston rod of the actuating cylinder and that of the actuated cylinder can move independently of each other so as to thus simplify the coupling procedure. After completion of the coupling procedure, the bypass line is closed, as a result of which the communication between the two opposite chambers of the actuating cylinder is broken off. The piston rod of the actuated cylinder now follows the movement of the piston rod of the actuating cylinder again and the system can function as a steering system, only for as long as the bypass line remains closed.

The firm of Tridec also markets a hydraulic steering system under the type designation HF steering system. For safety reasons and because of regulations in this regard, said HF system is in fact of dual construction, comprising two separate steering systems. Each steering system comprises a master cylinder at the front side of the trailer, which acts in dependence on the angular position between a tractor vehicle and the associated trailer. At the location of the self-steering wheels of the trailer, each steering system comprises a hydraulic cylinder which is in hydraulic communication with the associated master cylinder. The piston rod of the hydraulic cylinder is mechanically connected to a pair of track rods that steer the wheels. In practice it has been found that differences in the pressures that prevail in the cylinder chambers of the actuating cylinder means, and thus in the cylinder chambers of the actuated cylinder means, will inevitably arise. Such pressure differences, which may be caused by temperature differences, for example, adversely affect the tracking behaviour. To eliminate such pressure differences, the prevailing pressures on the hydraulic circuit need to be checked at regular intervals and be adjusted, if necessary, which requires manual interference by the driver, which in itself is undesirable and which in practice does not always take place correctly, which may lead to dangerous situations. This problem also occurs with the aforesaid steering system according to FR-A1-2 753 161.

The object of the present invention is to solve or at least alleviate the aforesaid problems. In order to accomplish that object, the steering system according to the invention is characterised by the features of the caracterising portion of claim 1.

Preferably, the steering system is provided with a filling means for automatically filling the cylinder chambers associated with the actuating cylinder means, or at least of a hydraulic circuit of which the cylinder chambers form part in case the pressure in the lines via which cylinder chambers associated with the actuated cylinder means communicate with respective cylinder chambers associated with the actuating cylinder means drops below a specified threshold value. Thus, no human interference is required for maintaining the correct pressure in the cylinder chambers in question. The fact is that the human factor has been found to be unreliable in practice, which may lead to less safe situations.

To reduce the cost price, in order that the steering system according to the invention can form an economically sound alternative to a mechanical steering system according to the prior art as described above, it is furthermore quite preferable if the piston rod associated with the actuated cylinder means is a continuous piston rod, which piston rod functions as a steering rod for the steered wheels of the towed vehicle. Thus, a hydraulic steering system that may form an economically sound alternative to a mechanical steering system can be obtained at a relatively low cost price. The aspects according to this preferred embodiment can also be implemented very advantageously in a system according to the prior art, in which case a steering system is provided for causing the wheels of a towed vehicle to steer in dependence on the angular position between the towed vehicle and a towing vehicle that tows the towed vehicle, said steering system comprising an actuated cylinder means and an actuating cylinder means for actuating the actuated cylinder means, said actuated cylinder means being of the double-acting type and comprising a cylinder housing with two opposite cylinder chambers present therein, and comprising a piston rod which is mechanically connected to at least one steered wheel and which piston rod is reciprocatingly movable between a neutral position and an actuated position in dependence on pressures prevailing inside within the cylinder housing, said actuating cylinder means likewise being of the double-acting type and comprising a cylinder housing with a piston body present therein, which piston body is reciprocatingly movable between a neutral position and an actuating position in dependence on the angular position between the towed vehicle and the towing vehicle and which defines two opposite cylinder chambers, one cylinder chamber of the actuating cylinder means being in communication with one cylinder chamber of the actuated cylinder means and the other cylinder chamber of the actuating cylinder means being in communication with the other cylinder chamber of the actuated cylinder means, said piston rod being a continuous piston rod, which functions as a track rod for the steered wheels of the towed vehicle.

For safety reasons it is preferable if resistance means are provided for offering resistance against movement of the piston rod associated with the actuated cylinder means from the neutral position thereof. This leads to the important advantage that if the pressure in one or both cylinder chambers of the actuating cylinder means should fall out, and thus, because of the communication between the actuating cylinder means and the actuated cylinder means, also in one or both cylinder chambers of the actuated cylinder means, irrespective of the position of the piston rod of the actuated cylinder means, and thus irrespective of the steering position of the associated steered wheels, the piston rod associated with the actuated cylinder means will be returned to the neutral position. Thus the self-steering function is cancelled and the wheels, which are normally self-steering, will take up the neutral position. A steering system in which such resistance means are used is known per se from EP 0 079 088.

For constructional reasons it is furthermore preferable if the resistance means comprise two further cylinder chambers, which, even more preferably, form part of the actuated cylinder means for providing counterpressure for forcing the piston rod back from an actuated position to the neutral position.

To prevent unstable self-steering behaviour in that case it is furthermore advantageous if the bypass line comprises a safety valve which, actuated by at least one pressure sensor that detects the pressure in the two further cylinder chambers, blocks communication between the cylinder chambers of the actuating cylinder means if the pressure in one or both further cylinder chambers falls out. Such blocking may furthermore be useful if a possibility is provided, using a separate pump directly connected between the cylinder chambers of the actuated cylinder means, to actuate the actuated cylinder means independently of the actuating cylinder means. This is also referred to as manual steering.

A solution which is highly attractive from a viewpoint of cost price is realised by the use of the aforesaid two further cylinder chambers if said cylinder chambers form part of a circuit comprising an accumulator which effects an elevated pressure in the circuit when the piston rod of the actuated cylinder means is in an actuated position. The elevated pressure forces the piston rod to the neutral position, as it were.

Preferably, the accumulator comprises a pneumatic pressure means and a hydraulic pressure means, which are arranged in series. The pneumatic pressure means, for example an air bellows in an advantageous embodiment, and the hydraulic cylinder means may be separated at least from each other by a fixed wall, so that the risk of leakage between the pneumatic space of the pneumatic pressure means and the hydraulic space of the hydraulic pressure means is quite small. Moreover, a good process control can be realised in this manner.

To minimise the range of motion of the piston body within which the communication via the bypass line between the cylinder chambers of the actuating cylinder means takes place, according to the invention, the piston body comprises a seal, and ends of the bypass line open into the respective cylinder chambers of the actuating cylinder means on either side of the seal, at a distance of maximally 25 mm, therefrom in the neutral position of the piston body.

It is in this respect more preferable if ends of the bypass line open into the respective cylinder chambers of the actuating cylinder means on either side of the seal, at a distance of maximally 12.5 mm, therefrom In the neutral position of the piston body.

Alternatively, or in combination therewith, the ends of the bypass line furthermore preferably open into the respective cylinder chambers of the actuating cylinder means on either side of the seal at a distance of maximally 50 mm, more preferably maximally 25 mm, from each other in the neutral position of the piston body. In practice this will generally still be within the axial length of the piston body. Within the framework of the present preferred embodiments it is relevant to note that where mention has been or will be made herein of the neutral position of the piston body of the actuating cylinder means, this may in fact also be a range of positions around the neutral position within which hardly any angular position, if at all, occurs between the towing vehicle and the towed vehicle.

In particular in combination with the aforesaid preferred embodiments, whose advantages are safety-related, it is furthermore preferable if the complete steering system comprises only one single actuating cylinder, so that the number of required (hydraulic) components, and thus the cost price, can be significantly reduced.

The present invention further provides a combination of a towing vehicle and a towed vehicle wherein, characteristic of the invention, the combination is provided with a steering system according to the invention as described in the foregoing. The advantages that can be achieved with such a combination have already been explained in the foregoing in the description of the steering system according to the invention.

With the combination according to the invention it is preferable if the actuating cylinder means is provided with a piston rod and the towing vehicle is connected to either one of the piston rod and the cylinder housing of the actuating cylinder means and the towed vehicle is connected to the other one of the piston rod and the cylinder housing of the actuating cylinder means. The angular position between the towing vehicle and the towed vehicle can thus be translated to a desired position of the piston body in a mechanically simple manner.

The invention will be explained in more detail hereinafter by means of a description of a preferred embodiment of steering systems according to the invention, in which reference is made to the following figures:
Figure 1 schematically shows a first preferred embodiment of the steering system according to the invention in the neutral position thereof;
Figure 2 shows the steering system of figure 1 in a steered position thereof;
Figure 3 schematically shows a second preferred embodiment of the steering system according to the invention in the neutral position thereof;
Figure 4 shows the steering system of figure 3 in a steered position thereof; and
Figure 5 shows in top plan view a third preferred embodiment of a steering system according to the invention in a steered position thereof.

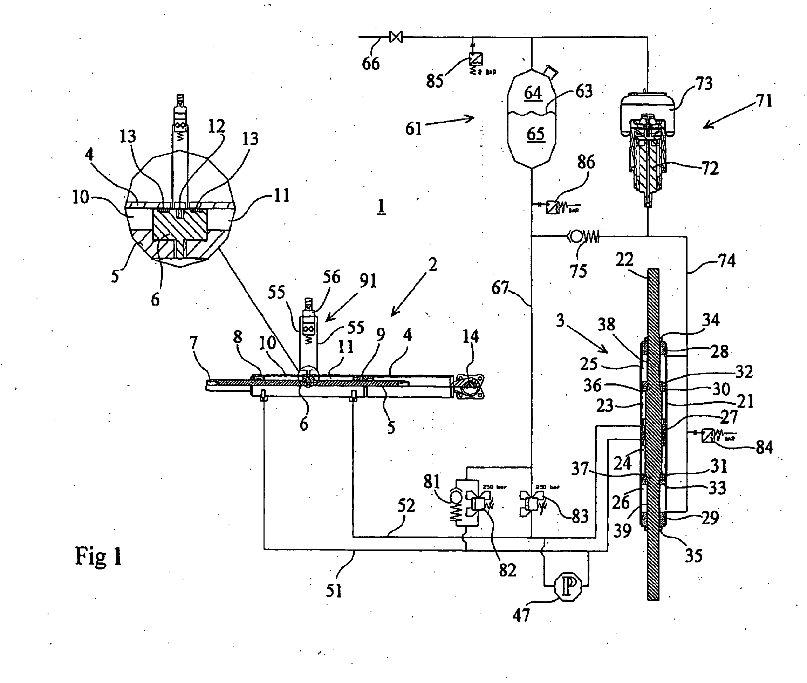

Figure 1 shows a steering system 1 comprising an actuating cylinder means 2 and an actuated cylinder means 3.

The actuating cylinder means 2 is of the double-acting type and comprises a cylinder housing 4, a piston rod 5 and a piston body 6 which is rigidly connected to the piston rod 5 at a position halfway the length of the piston rod 5. The piston rod 5 projects outside the cylinder housing 4 with one end 7, which cylinder housing 4 has about the same length as the piston rod 5. At its end located near the end 7, the cylinder housing 4 is provided with an inwardly oriented sleeve-shaped first cylinder head 8. At a position slightly beyond halfway the length of the cylinder housing 4, seen from the cylinder head 8, the cylinder housing 4 is provided with an inwardly oriented sleeve-shaped second cylinder head 9. The cylinder heads 8 and 9 sealingly abut against the outer circumference of the piston rod 5. At its circumference at a position halfway its axial length, the piston body 6 is provided with a sealing ring 12. Within the axial length of the piston body 6, the piston body 6 is provided with guide strips on either side of the sealing ring 12, which guide strips do not have a sealing function and which do not function as such, but which are only provided in order to help obtain a correct mechanical axial guidance of the piston body 6 within the cylinder housing 4. The cylinder means 2 comprises two cylinder chambers 10, 11, which are provided between the piston body 6 and the cylinder head 8 on the one hand and between the piston body 6 and the cylinder head 9 on the other hand, respectively, more specifically between the associated seals thereof.

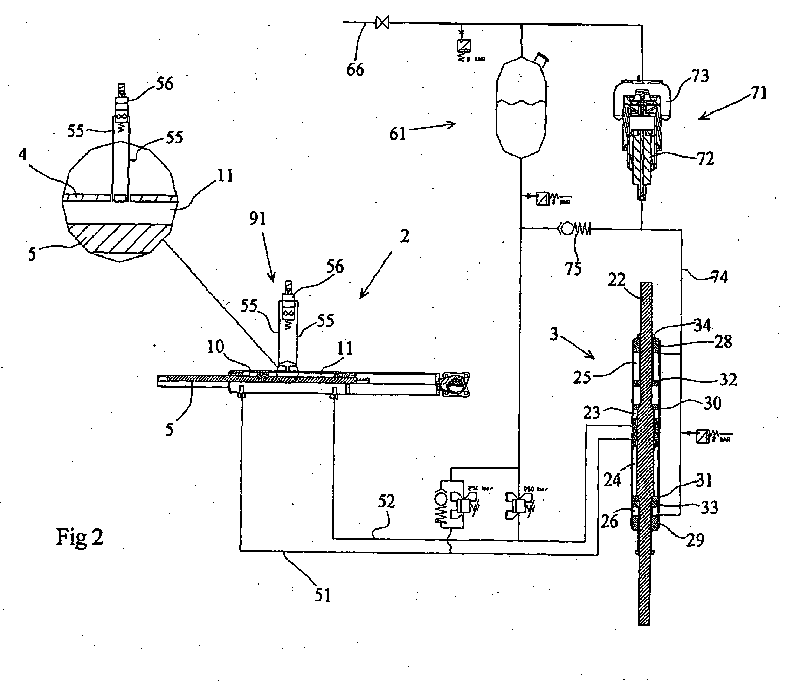

In applied form, the piston rod 5 is connected to a tractor (not shown) at the end 7, whilst the cylinder housing 4 is connected, at the location of the coupling 14, to a trailer (not shown) at the location of the pivoted coupling between the tractor and the trailer, in such a manner that if the tractor and the trailer are in line with each other when the tractor is driving straight ahead, the piston body 6 takes up a neutral position as shown in figure 1, and if the tractor and the trailer are not in line with each other when taking a bend, the piston rod 5, and thus the piston body 6, is moved in axial direction into or out of the cylinder housing 4 (depending on whether a bend to the left or a bend to the right is being taken) (see figure 2), as a result of which the volumes of the cylinder chambers 10 and 11 will increase or decrease. The latter characteristic is utilised for actuating the actuated cylinder means 3, as will become apparent hereinafter.

The actuated cylinder means 3 is likewise of the double-acting type and is known per se. The cylinder means 3 comprises a cylinder housing 21 and a continuous piston rod 22. The piston rod 22 functions as a track rod for steering wheels of a pair of wheels of the trailer. The cylinder means 3 comprises two mirror-symmetric cylinder chambers 23, 24, at least in the neutral position, and two further cylinder chambers 25, 26 on the outer sides of the cylinder chambers 23, 24. Said (further) cylinder chambers 23-26 are defined by a central cylinder head 27 which is fixedly connected to the cylinder housing 21, cylinder heads 28, 29 which are fixedly connected to the cylinder housing 21, piston bodies 30, 31 which are fixedly connected to the piston rod 22 and piston bodies 32, 33 . The piston bodies 32, 33 are connected to stop collars 34, 35 on the outer sides of the respective cylinder heads 28, 29 via connecting sleeves 38, 39, respectively, extending around the piston rod 22 and within the cylinder heads 28, 29. The piston bodies 32, 33 abut against collars 36, 37 forming part of the piston rod 22 with their sides facing the centre of the cylinder means 3. Because of the above-described construction, the volume of said further cylinder chambers 25, 26 can only decrease in relation to the volume in the neutral position of the actuated cylinder means 3, as is shown in figure 1, in contrast to the cylinder chambers 23, 24, whose volume can increase as well as decrease in relation to the volume in the neutral position (compare figures 1 and 2).

The cylinder chamber 10 of the actuating cylinder means 2 and the cylinder chamber 24 of the actuated cylinder means 3 on the one hand and the cylinder chamber 11 of the actuating cylinder means 2 and the cylinder chamber 23 of the actuated cylinder means 3 on the other hand communicate with each other via hydraulic lines 50 and 52 respectively. Between lines 51, 52 a pump 47 is provided. The actuated cylinder means 3 can be actuated independently of the actuating cylinder means 2 by suitably driving the pump 47.

The actuating cylinder means 2 comprises a bypass system 91 with a bypass line 55 whose ends open at a distance of 15 mm from each other, through the wall of the cylinder housing 4, into the respective cylinder chambers 10, 11 on either side of the sealing ring 12, but still inwardly of the respective guide strips 13, in the neutral position as shown in figure 1. Incorporated in the bypass line 55 is an optional safety valve 56, which, in the normal operating position, allows communication between the cylinder chambers 10, 11, provided the piston body 6 is in the neutral position.

The steering system 1 further comprises a filling reservoir 61 essentially consisting of a vessel 62 with an (optional) membrane 63 present therein, which divides the interior of the vessel 62 into a pneumatic pressure space 64 and a hydraulic pressure space 65. The pressures in the pneumatic pressure space 64 and the hydraulic pressure space 65 are equal. The pneumatic pressure space 64 is connected to the tractor's system pressure 66, typically in the order of 10 bar. The hydraulic pressure space 65 communicates with the respective hydraulic lines 51, 52 via the hydraulic line 67 and is thus capable of supplying oil from the hydraulic pressure space 62 via the non-return valve 81 in case the pressure in the lines 51, 52 in question should fall below a specified threshold value, for example as a result of the so-called "sweating" of oil, which appears to occur regularly in practice. Safety valves 82, 83 are provided to enable oil to flow from the lines 51, 52 to the filling reservoir 61 in case the pressure in the lines 51, 52 should run up too high. A pressure sensor 86 is provided for delivering a signal if the hydraulic pressure space 65 is insufficiently filled with oil, as a result of which the pressure in the hydraulic line 67 becomes too low and the capacity of the filling reservoir might decrease too far for replenishing the oil in the lines 51, 52. Those skilled in the art will appreciate that alternatively it is also possible to use a number of filling reservoirs 61 instead of one single filling reservoir 61.

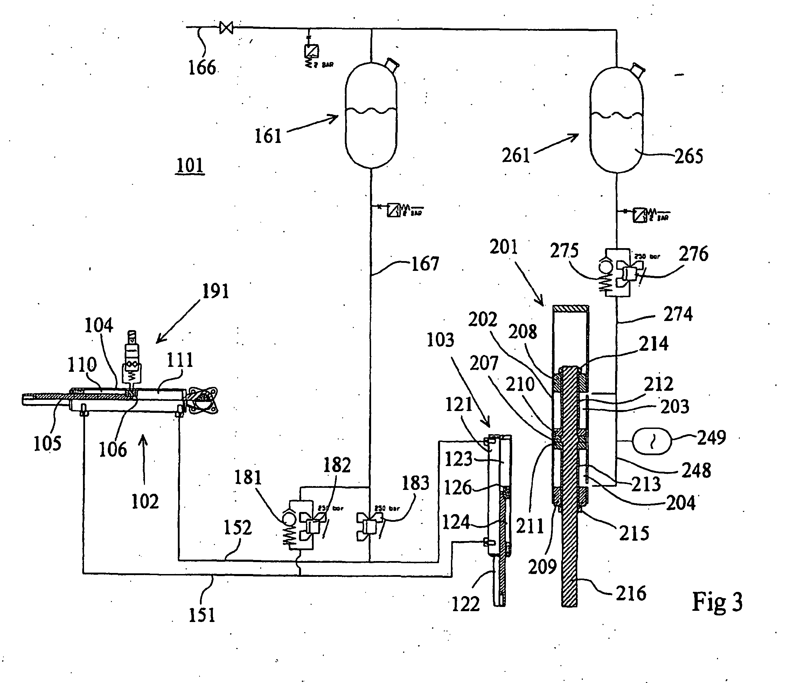

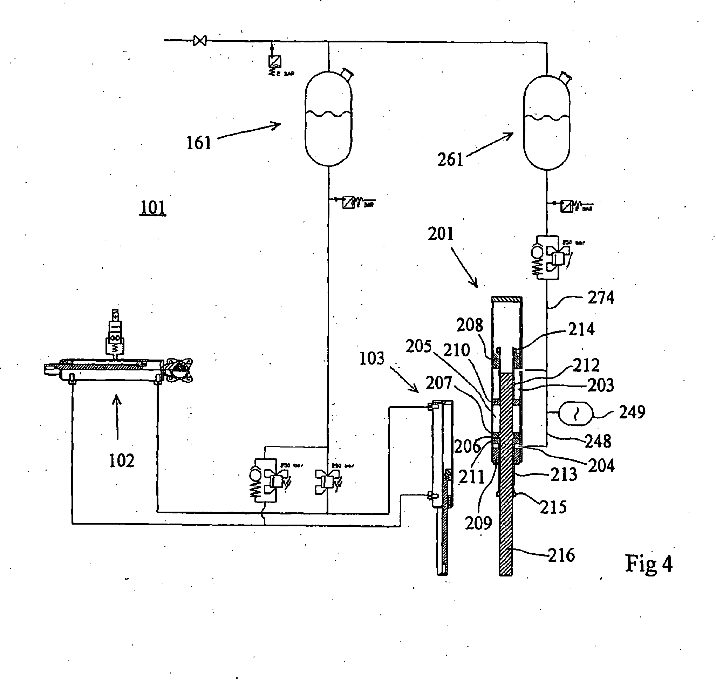

The steering system 1 further comprises a hydro-pneumatic accumulator 71. The accumulator 71 is mounted with its ends between the fixed structure, which may be formed by parts of the trailer chassis, as a result of which the total length of the accumulator 71 will not change in use. The accumulator 71 essentially comprises a hydraulic cylinder 72 and a pneumatic bellows 73, which are connected in series. The pneumatic bellows 73 is connected to the system pressure 66, whilst the hydraulic cylinder 72 communicates with the further cylinder chambers 25, 26 via the hydraulic line 74. A non-return valve 75 is provided between the hydraulic lines 74 and 67. It is noted that instead of using the accumulator 71 as described above it is also possible to use a conventional accumulator or a number of conventional accumulators, which may be configured similar to the accumulator 249 in figures 3 and 4.

The steering system 1 functions as follows. When the tractor steers to the left or to the right from a neutral position, the piston rod 5 is moved into or out of the cylinder housing 4. Figure 2 shows how the piston rod 5 is moved out of the cylinder housing 4. As a result, the volume of the cylinder chamber 10 decreases and the volume of the cylinder chamber 11 increases. As a result, hydraulic medium present inside the cylinder chamber 10 is forced from said cylinder chamber 10 to the cylinder chamber 24 of the actuated cylinder 3 via the line 51. This causes the volume of said cylinder chamber 24 to increase because the piston body 31 is forced towards the cylinder head 29, pulling along the piston rod 22. The piston body 31 will furthermore push the piston body 33 along, as a result of which the volume of the further cylinder chamber 26 will decrease. The piston body 30 will as well be moved along with the piston rod 22, as a result of which the volume of the cylinder chamber 23 will decrease. The hydraulic medium that was originally present therein will be moved, via the line 52, in the direction of the cylinder chamber 11 of the actuating cylinder means 2, which provides space for said medium as a result of the aforesaid volume increase thereof. Since the stop collar 34 strikes against the cylinder head 28, the position of the piston body 32 will not change, so that the volume of said further cylinder chamber 25 will remain the same.

As already indicated, the piston rod 22 functions as a track rod. The movement in axial direction of the piston rod 22 is thus utilised for steering associated wheels of the towed vehicle, in a manner which is known to those skilled in the art and which does not require any further explanation.

Because the volume of the further cylinder chamber 26 decreases and the volume of the further cylinder 25 remains the same, hydraulic medium is moved in the direction of the hydraulic cylinder 72 of the accumulator 71 via the line 74. As a result, the length of the cylinder 72 will increase, causing the pneumatic bellows 73 to be compressed. Because of the different operative surface areas, an elevated pressure of for example 50 bar instead of the original 10 bar will thus develop in the hydraulic line 74, and thus in the further cylinder chambers 25, 26. The non-return valve 75 prevents said elevated pressure from prevailing in the line 67 as well. The elevated pressure in the further cylinder chamber 26 tends to force the piston rod 22 back to the neutral position shown in figure 1.

In practice there is a risk that with the passage of time pressure differences will develop in use between the cylinder chambers 10 and 11. In particular when driving straight ahead this leads to a disadvantageous tracking behaviour of the steered wheels associated with the actuated cylinder means 3. The aforesaid pressure differences are now eliminated by means of the bypass line 55 each time the actuating cylinder means 2 takes up the neutral position shown in figure 1. After all, at that moment the cylinder chambers 10 and 11 communicate with each other via the bypass line 55 and any pressure differences will thus be levelled out.

The bypass line 55 does involve the risk that in case the pressure in the line 74, and thus in the further cylinder chambers 25, 26, should fall out, and the piston rod 22 would for that reason not be induced, or at least not to a sufficient extent, to return to the neutral position, this would lead to an unstable self-steering behaviour in the situation in which the actuating cylinder means 2 is in the neutral position shown in figure 1. After all, the cylinder chambers 10 and 11 communicate with each other in that case, for which reason an equal pressure will likewise prevail in the cylinder chambers 23 and 24, as a result of which the piston rod 22 will encounter hardly any resistance, if at all, as regards its reciprocating movement. This risk is eliminated, however, by the safety valve 56, which will shut off the bypass line 55 in response to the falling out of the pressure in the line 74, so that there will be no communication between the cylinder chambers 10 and 11 in the neutral position of the actuated cylinder means 2, either. The falling out of the aforesaid pressure can be detected by pressure sensors 84 and/or 85, which can actuate the safety valve 56.

In case the pressure in one or both lines 51, 52 should fall out, the actuated cylinder means 3 will take up the neutral position shown in figure 1 on account of the operation of the accumulator 71, irrespective of the position of the actuating cylinder means 2. In such an exceptional situation there will thus be no self-steering of the wheels associated with the piston rod 22 in dependence on the angular position between the towed vehicle and the towing vehicle, or the position of the actuating cylinder means 2.

Figures 3 and 4 relates to a steering system 101 according to the invention. The steering system 101 comprises an actuating cylinder means 102 and an actuated cylinder means 103.

The actuating cylinder means 102 is of the double-acting type and comprises a cylinder housing 104, a single-sided piston rod 105 and a piston body 106 which is rigidly connected to the end of the piston rod 105 that is positioned within the cylinder housing 104. The piston body 106 corresponds to the piston body 6 of the steering system 1 and divides the interior of the cylinder housing 104 into cylinder chambers 110, 111. The actuating cylinder means 102 further comprises a bypass system 191, which is fully comparable to the bypass system 91 of the steering system 1 and which interacts with the piston body 106 in a manner identical to the manner in which the bypass system 91 interacts with the piston body 6 as described in the foregoing.

The actuated cylinder means 103 is likewise of the double-acting type and comprises a cylinder housing 121 and a singie-sided piston rod 122. At the end of the piston rod 122 that is positioned within the cylinder housing 121, a piston body 126 connected to said end is provided, which piston body 126 divides the interior of the cylinder housing 121 into cylinder chambers 123, 124. The cylinder chamber 110 of the actuating cylinder means 102 communicates with the cylinder chamber 124 of the actuated cylinder means 103 via the hydraulic line 151, whilst the cylinder chamber 111 of the actuating cylinder means 102 communicates with the cylinder chamber 123 of the actuated cylinder means 103 via the hydraulic line 152. The hydraulic lines 151, 152 are in communication with the system pressure 166 via the filling reservoir 161, the line 167, the non-return valve 181 and the safety valves 182, 183 in a manner as already explained in the foregoing with reference to the steering system 1.

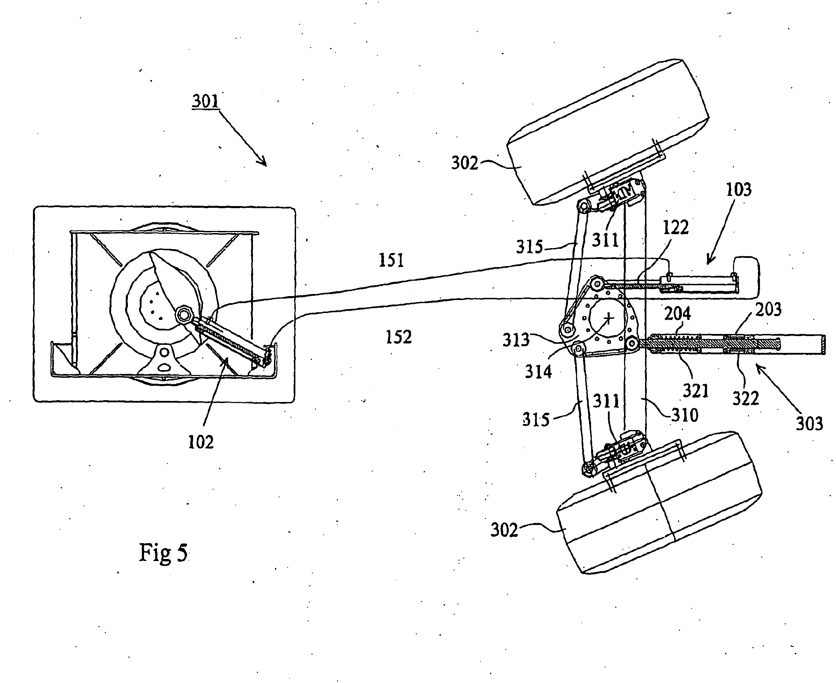

Because of the communication via the lines 151, 152, movement of the piston rod 105 associated with the actuating cylinder means 102 imposed by a steering movement of the tractor in combination with which the steering system 101 is used will result in movement of the piston rod 122 associated with the actuated cylinder means 103. As is shown in figure 5 for an alternative embodiment, the piston rod 122 is mechanically connected to the wheels 302 for steering the same.

The steering system 101 further comprises an auxiliary cylinder means 201, which functions to ensure that, also if the pressure in one of the cylinder chambers 110, 111, 123, 124 should fall out, the wheels 302 will take up the neutral position in which the wheels 302 are oriented straight ahead. The auxiliary cylinder means 201 is in this case provided instead of the auxiliary spring element 303 in figure 5.

The auxiliary cylinder means 201 comprises a cylinder housing 202 with cylinder chambers 203, 204 present therein, which cylinder chambers are identical to each other as regards their volume, at least in the neutral position shown in figure 3. In said neutral position, the cylinder chambers 203, 204 are on the one hand separated from each other by the piston body 207 and by piston bodies 210, 211, which are provided on either side of the piston body 207. On the other hand, the cylinder chambers 203 and 204 communicate with each other, both in the neutral position and in an actuated position as shown in figure 4, via the hydraulic line 248, to which also an accumulator 249 is connected. At the location of the embossed part 215 of the piston rod 216, the piston body 207 is rigidly connected to the piston rod 216. The piston bodies 210, 211 are integral with connecting sleeves 212, 213, respectively, extending round the piston rod 216 and with stop collars 214, 215, respectively, and are in principle movable as one unit along the piston rod 216, insofar as the stop collars do not prevent such movement. At the outer ends, the cylinder chambers 203, 204 are bounded by cylinder heads 208, 209, respectively, on the outer side of which the stop collars 214, 215 are provided. The cylinder chambers 203, 204 are in communication with the hydraulic pressure space 265 of the filling reservoir 261 via the hydraulic line 274 with the non-return valve 275 and a safety valve 276 incorporated therein. Maintaining the correct pressure, inter alia in the pressure chambers 203, 204, thus takes place automatically.

When the piston rod 216 is forced to move from the neutral position shown in figure 3, as is illustrated for one direction in figure 4, a further cylinder chamber 205, 206 is formed between the central piston body 207 and one of the piston bodies 210, 211. In figure 4 this is the further cylinder chamber 205. In fact the cylinder chamber 206 is not present in figure 4 or at least has volume equal to zero. One of the cylinder chambers 203, 204 (the cylinder chamber 203 in figure 4) remains unchanged as regards its volume, whilst the volume of the other cylinder chambers 204, 203 (cylinder chamber 204 in figure 4) decreases.

The accumulator 249 attempts to reduce the pressure in the hydraulic line 248, which is achieved when the cylinder chambers 203, 204 take up their maximum volume. The interaction between the auxiliary cylinder means 201 and the accumulator 249 via the hydraulic line 248 is such that when the piston rod 216 is forced form the neutral position, the piston rod 216 will tend to return to said neutral position.

Figure 5 shows a steering system 301. The steering system 301 largely corresponds to the steering system 101 and requires no further explanation herein, at least as far as the corresponding part is concerned. In figure 5, parts of the steering system 301 that correspond to certain parts of the steering system 101 are indicated by the same numerals.

Like the steering system 101, the steering system 301 comprises self-steering wheels 302 at the ends of the axle housing 310. The wheels 302 are mounted to wheel bodies 311, being rotatable about their respective horizontal axes of rotation. The wheel bodies 311 are connected to the ends of the axle body 310, being pivotable jointly with the associated wheels 302 about at least substantially vertical pivots of the baii joint steering knuckle type, as is known per se to those skilled in the art.

The steering system 301 (and the steering system 101) further comprise(s) a steering plate 313. The steering plate 313 is pivotally connected, about a vertical pivot axis 314, to the chassis (not shown in detail) of the vehicle in question or to the axle body 310. The respective wheel bodies 311 are pivotally connected to the steering plate 313 via track rods 315. The actuated cylinder means 103 is operative between the vehicle chassis and the steering plate 313. Extension or retraction of the piston rod 122 will cause the steering plate 313 to pivot about the pivot axis 314, thus pushing or pulling the track rods 315 along, as a result of which the wheel bodies 311 will pivot in the same direction and at least substantially to the same extent about their vertical pivot, as a result of which the wheels 302 will make a steering movement.

The steering system 301 further comprises an auxiliary spring element 303, which is identical to the auxiliary cylinder means 201 as regards its construction. The auxiliary spring element 303 does not use hydraulic pressure, however, but instead it makes use of pre-tensioned compression springs 321, 322, which are provided within the respective cylinder chambers 204, 203. The pivoting of the steering plate 313 and thus the steering of the wheels 302 as imposed by the movement of the piston rod 122, which is in turn moved as a result of the operation of the actuating cylinder means 102, is opposed by the auxiliary spring element 303, which attempts to return the steering plate 313 to the neutral position, in which the wheels 302 are oriented straight ahead.

## Claims

1. A steering system (1; 101; 301) for causing wheels (302) of a towed vehicle to steer in dependence on the angular position between the towed vehicle and a towing vehicle which tows the towed vehicle, said steering system comprising an actuated cylinder means (3; 103) and an actuating cylinder means (2; 102) for actuating the actuated cylinder means, said actuated cylinder means being of the double-acting type and comprising a cylinder housing (21; 121) with two opposite cylinder chambers (23, 24; 123, 124) present therein, and comprising a piston rod (22; 122) which is mechanically connected to at least one steered wheel and which piston rod is reciprocatingly movable between a neutral position and an actuated position in dependence on pressures prevailing inside within the cylinder housing, said actuating cylinder means likewise being of the double-acting type, and comprising a cylinder housing (4; 104) with a piston body (6; 106) comprising a seal (12) present therein, which piston body is reciprocatingly movable between a neutral position and an actuating position in dependence on the angular position between the towed vehicle and the towing vehicle and which defines two opposite cylinder chambers (10, 11; 110; 111), one cylinder chamber of the actuating cylinder means being in communication with one cylinder chamber of the actuated cylinder means and the other cylinder chamber of the actuating cylinder means being in communication with the other cylinder chamber of the actuated cylinder means, said actuating cylinder means being provided with a bypass line (55), **characterised in that** ends of the bypass line open into the respective cylinder chambers of the actuating cylinder means on either side of the seal, at a distance of maximally 25 mm, therefrom in the neutral position of the piston body for causing the cylinder chambers of the actuating cylinder means to communicate with each other automatically and that only in the neutral position.

2. A steering system according to claim 1, **characterised in that** a filling means (61; 161) is provided for automatically filling the cylinder chambers associated with the actuating cylinder means, or at least of a hydraulic circuit of which the cylinder chambers form part in case the pressure in a line (51, 52) via which cylinder chambers associated with the actuated cylinder means communicate with respective cylinder chambers associated with the actuating cylinder means drops below a specified threshold value.

3. A steering system according to claim 1 or 2, **characterised in that** the piston rod associated with the actuated cylinder means is a continuous piston rod, which piston rod functions as a steering rod for the steered wheels of the towed vehicle.

4. A steering system according to claim 1, 2 or 3, **characterised in that** resistance means (25, 26, 61; 201, 249; 303) are provided for offering resistance against movement of the piston rod associated with the actuated cylinder means from the neutral position thereof

5. A steering system according to claim 4, **characterised in that** said resistance means comprise two further cylinder chambers (25, 26; 203, 204) for providing counterpressure for forcing the piston rod back from an actuated position to the neutral position.

6. A steering system according to claim 5, **characterised in that** said further cylinder chambers (25, 26) form part of the actuated cylinder means.

7. A steering system according to claim 1 and claim 5, **characterised in that** the bypass line comprises a safety valve (56) which, actuated by at least one pressure sensor (84, 85) that senses the pressure in the two further cylinder chambers, blocks communication between the cylinder chambers of the actuating cylinder means if the pressure in one or both further cylinder chambers falls out.

8. A steering system according to claim 5, 6 or 7, **characterised in that** said two further cylinder chambers form part of a circuit comprising an accumulator (71; 249) which effects an elevated pressure in the circuit when the piston rod of the actuated cylinder means is in an actuated position.

9. A steering system according to claim 8, **characterised in that** the accumulator (71) comprises a pneumatic pressure means (73) and a hydraulic pressure means (72), which are arranged in series.

10. A steering system according to any one of the preceding claims, **characterised in that** ends of the bypass line open into the respective cylinder chambers of the actuating cylinder means on either side of the seal, at a distance of maximally 12.5 mm, therefrom in the neutral position of the piston body.

11. A steering system according to any one of the preceding claims, **characterised in that** the piston body comprises a seal (12), and **in that** ends of the bypass line open into the respective cylinder chambers of the actuating cylinder means on either side of the seal at a distance of maximally 50 mm, more preferably maximally 25 mm, from each other in the neutral position of the piston body.

12. A steering system according to any one of the preceding claims, **characterised in that** only one actuating cylinder is provided.

13. A combination of a towing vehicle and a towed vehicle, **characterised in that** the combination is provided with a steering system according to any one of the preceding claims.

14. A combination according to claim 13, **characterised in that** the actuating cylinder means is provided with a piston rod and the towing vehicle is connected to either one of the piston rod and the cylinder housing of the actuating cylinder means and the towed vehicle is connected to the other one of the piston rod and the cylinder housing of the actuating cylinder means.

## Patentansprüche

1. Lenksystem (1; 101; 301), um zu bewirken, dass Räder (302) eines Anhängefahrzeugs in Abhängigkeit von der Winkelstellung zwischen dem Anhängefahrzeug und einem Zugfahrzeug, welches das Anhängefahrzeug zieht, lenken, wobei das Lenksystem eine betätigte Zylindereinrichtung (3; 103) und eine betätigende Zylindereinrichtung (2; 102) zum Betätigen der betätigten Zylindereinrichtung umfasst, wobei die betätigte Zylindereinrichtung vom doppeltwirkenden Typ ist und ein Zylindergehäuse (21; 121) mit zwei darin vorhandenen entgegengesetzten Zylinderkammern (23, 24; 123, 124) umfasst, und mit einer Kolbenstange (22; 122), die mit mindestens einem gelenkten Rad mechanisch verbunden ist und die in Abhängigkeit von im Inneren des Zylindergehäuses herrschenden Drücken zwischen einer Ruhestellung und einer Betätigungsstellung hin und her bewegbar ist, wobei die betätigende Zylindereinrichtung ebenfalls vom doppeltwirkenden Typ ist und ein Zylindergehäuse (4; 104) mit einem darin vorhandenen Kolbenkörper (6; 106) mit einer Dichtung (12) umfasst, wobei der Kolbenkörper in Abhängigkeit von der Winkelstellung zwischen dem Anhängefahrzeug und dem Zugfahrzeug zwischen einer Ruhestellung und einer Betätigungsstellung hin und her bewegbar ist und zwei entgegengesetzte Zylinderkammern (10, 11; 110, 111) definiert, wobei eine Zylinderkammer der betätigenden Zylindereinrichtung mit einer Zylinderkammer der betätigten Zylindereinrichtung in Verbindung steht und die andere Zylinderkammer der betätigenden Zylindereinrichtung mit der anderen Zylinderkammer der betätigten Zylindereinrichtung in Verbindung steht, wobei die betätigende Zylindereinrichtung mit einer Umgehungsleitung (55) versehen ist, **dadurch gekennzeichnet, dass** in der Ruhestellung des Kolbenkörpers Enden der Umgehungsleitung in die jeweiligen Zylinderkammern der betätigenden Zylindereinrichtung auf beiden Seiten der Dichtung in einem Abstand von maximal 25 mm davon münden, um zu bewirken, dass die Zylinderkammern der betätigenden Zylindereinrichtung automatisch und dies nur in der Ruhestellung miteinander in Verbindung stehen.

2. Lenksystem nach Anspruch 1, **dadurch gekennzeichnet, dass** ein Füllmittel (61; 161) vorgesehen ist, um die zu der betätigenden Zylindereinrichtung gehörigen Zylinderkammern automatisch zu füllen, oder mindestens einen Hydraulikkreis, zu dem die Zylinderkammern gehören, falls der Druck in einer Leitung (51, 52), über welche die zu der betätigten Zylindereinrichtung gehörigen Zylinderkammern mit den jeweiligen zu der betätigenden Zylindereinrichtung gehörigen Zylinderkammern in Verbindung stehen, unter einen vorgegebenen Schwellwert fällt.

3. Lenksystem nach Anspruch 1 oder 2, **dadurch gekennzeichnet, dass** die zu der betätigten Zylindereinrichtung gehörige Kolbenstange eine durchgehende Kolbenstange ist, die als Lenkstange für die gelenkten Räder des Anhängefahrzeugs fungiert.

4. Lenksystem nach Anspruch 1, 2 oder 3, **dadurch gekennzeichnet, dass** Widerstandsmittel (25, 26, 61; 201, 249; 303) vorgesehen sind, um einen Widerstand gegen eine Bewegung der zu der betätigten Zylindereinrichtung gehörigen Kolbenstange aus ihrer Ruhestellung auszuüben.

5. Lenksystem nach Anspruch 4, **dadurch gekennzeichnet, dass** die Widerstandsmittel zwei weitere Zylinderkammern (25, 26; 203, 204) umfassen, um einen Gegendruck bereitzustellen, um die Kolbenstange von einer Betätigungsstellung wieder zurück in die Ruhestellung zu drücken.

6. Lenksystem nach Anspruch 5, **dadurch gekennzeichnet, dass** die weiteren Zylinderkammern (25, 26) Bestandteil der betätigten Zylindereinrichtung sind.

7. Lenksystem nach Anspruch 1 und Anspruch 5, **dadurch gekennzeichnet, dass** die Umgehungsleitung ein Sicherheitsventil (56) umfasst, das bei Betätigung durch mindestens einen Drucksensor (84, 85), der den Druck in den zwei weiteren Zylinderkammern erfasst, die Verbindung zwischen den Zylinderkammern der betätigenden Zylindereinrichtung unterbricht, wenn der Druck in einer oder in beiden weiteren Zylinderkammern abfällt.

8. Lenksystem nach Anspruch 5, 6 oder 7, **dadurch gekennzeichnet, dass** die zwei weiteren Zylinderkammern Bestandteil eines Schaltkreises sind, der einen Akkumulator (71; 249) umfasst, der einen erhöhten Druck in dem Schaltkreis bewirkt, wenn sich die Kolbenstange der betätigten Zylindereinrichtung in einer Betätigungsstellung befindet.

9. Lenksystem nach Anspruch 8, **dadurch gekennzeichnet, dass** der Akkumulator (71) ein pneumatisches Druckmittel (73) und ein hydraulisches Druckmittel (72) umfasst, die hintereinandergeschaltet sind.

10. Lenksystem nach einem der vorhergehenden Ansprüche, **dadurch gekennzeichnet, dass** in der Ruhestellung des Kolbenkörpers Enden der Umgehungsleitung in die jeweiligen Zylinderkammern der betätigenden Zylindereinrichtung auf beiden Seiten der Dichtung in einem Abstand von maximal 12,5 mm davon münden.

11. Lenksystem nach einem der vorhergehenden Ansprüche, **dadurch gekennzeichnet, dass** der Kolbenkörper eine Dichtung (12) umfasst und dass in der Ruhestellung des Kolbenkörpers Enden der Umgehungsleitung in die jeweiligen Zylinderkammern der betätigenden Zylindereinrichtung auf beiden Seiten der Dichtung in einem Abstand von maximal 50 mm, mehr bevorzugt maximal 25 mm voneinander münden.

12. Lenksystem nach einem der vorhergehenden Ansprüche, **dadurch gekennzeichnet, dass** nur ein Betätigungszylinder vorgesehen ist.

13. Kombination aus einem Zugfahrzeug und einem Anhängefahrzeug, **dadurch gekennzeichnet, dass** die Kombination mit einem Lenksystem nach einem der vorhergehenden Ansprüche versehen ist.

14. Kombination nach Anspruch 13, **dadurch gekennzeichnet, dass** die betätigende Zylindereinrichtung mit einer Kolbenstange versehen ist und das Zugfahrzeug mit einem von der Kolbenstange und dem Zylindergehäuse der betätigenden Zylindereinrichtung verbunden ist und das Anhängefahrzeug mit dem anderen von der Kolbenstange und dem Zylindergehäuse der betätigenden Zylindereinrichtung verbunden ist.

## Revendications

1. Système de direction (1 ; 101 ; 301) pour amener des roues (302) d'un véhicule remorqué à se diriger en fonction de la position angulaire entre le véhicule remorqué et un véhicule de remorquage qui remorque le véhicule remorqué, ledit système de direction comprenant des moyens de cylindre actionnés (3 ; 103) et des moyens de cylindre d'actionnement (2 ; 102) pour actionner les moyens de cylindre actionnés, lesdits moyens de cylindre actionnés étant du type à double effet et comprenant un logement de cylindre (21 ; 121) avec deux chambres de cylindre opposées (23, 24 ; 123, 124) présentes à l'intérieur de ce dernier, et comprenant une tige de piston (22 ; 122) qui est raccordée de manière mécanique à au moins une roue dirigée et laquelle tige de piston est mobile selon un mouvement de va-et-vient entre une position neutre et une position actionnée en fonction des pressions dominantes à l'intérieur du logement de cylindre, lesdits moyens de cylindre d'actionnement étant également de type à double effet et comprenant un logement de cylindre (4 ; 104) avec un corps de piston (6 ; 106) comprenant un joint d'étanchéité (12) présent à l'intérieur de ce dernier, lequel corps de piston est mobile selon un mouvement de va-et-vient entre une position neutre et une position d'actionnement en fonction de la position angulaire entre le véhicule remorqué et le véhicule de remorquage et qui définit deux chambres de cylindre opposées (10, 11 ; 110 ; 111), une chambre de cylindre des moyens de cylindre d'actionnement étant en communication avec une chambre de cylindre des moyens de cylindre actionnés et l'autre chambre de cylindre des moyens de cylindre d'actionnement étant en communication avec l'autre chambre de cylindre des moyens de cylindre actionnés, lesdits moyens de cylindre d'actionnement étant prévus avec une conduite de dérivation (55), **caractérisé en ce que** les extrémités de la conduite de dérivation s'ouvrent dans les chambres de cylindre respectives des moyens de cylindre d'actionnement de chaque côté du joint d'étanchéité, à une distance maximale de 25 mm, dans la position neutre du corps de piston pour amener les chambres de cylindre des moyens de cylindre d'actionnement à communiquer entre elles automatiquement et ceci uniquement dans la position neutre.

2. Système de direction selon la revendication 1, **caractérisé en ce que** des moyens de remplissage (61 ; 161) sont prévus pour remplir automatiquement les chambres de cylindre associées aux moyens de cylindre d'actionnement, ou au moins d'un circuit hydraulique dont les chambres de cylindre font partie dans le cas où la pression dans une conduite (51, 52) grâce à laquelle les chambres de cylindre associées aux moyens de cylindre actionnés communiquent avec les chambres de cylindre respectives associées aux moyens de cylindre d'actionnement, chute au-dessous d'un valeur de seuil spécifiée.

3. Système de direction selon la revendication 1 ou 2, **caractérisé en ce que** la tige de piston associée aux moyens de cylindre actionnés est une tige de piston continue, laquelle tige de piston fonctionne comme une tige de direction pour les roues dirigées du véhicule remorqué.

4. Système de direction selon la revendication 1, 2 ou 3, **caractérisé en ce que** l'on prévoit des moyens de résistance (25, 26, 61; 201, 249 ; 303) pour offrir une résistance contre le mouvement de la tige de piston associée aux moyens de cylindre actionnés à partir de leur position neutre.

5. Système de direction selon la revendication 4, **caractérisé en ce que** lesdits moyens de résistance comprennent deux autres chambres de cylindre (25, 26 ; 203, 204) pour fournir une contre-pression afin de ramener la tige de piston de force d'une position actionnée à la position neutre.

6. Système de direction selon la revendication 5, **caractérisé en ce que** lesdites chambres de cylindre supplémentaires (25, 26) font partie des moyens de cylindre actionnés.

7. Système de direction selon la revendication 1 et la revendication 5, **caractérisé en ce que** la conduite de dérivation comprend une soupape de sécurité (56) qui, actionnée par au moins un capteur de pression (84, 85) qui détecte la pression dans les deux chambres de cylindre supplémentaires, empêche la communication entre les chambres de cylindre des moyens de cylindre d'actionnement si la pression dans l'une ou les deux chambres de cylindre supplémentaires, chute.

8. Système de direction selon la revendication 5, 6 ou 7, **caractérisé en ce que** lesdites deux chambres de cylindre supplémentaires font partie d'un circuit comprenant un accumulateur (71 ; 249) qui effectue une pression élevée dans le circuit lorsque la tige de piston des moyens de cylindre actionnés est dans la position actionnée.

9. Système de direction selon la revendication 8, **caractérisé en ce que** l'accumulateur (71) comprend des moyens de pression pneumatiques (73) et des moyens de pression hydrauliques (72) qui sont agencés en série.

10. Système de direction selon l'une quelconque des revendications précédentes, **caractérisé en ce que** les extrémités de la conduite de dérivation s'ouvrent dans les chambres de cylindre respectives des moyens de cylindre d'actionnement de chaque côté du joint d'étanchéité, à une distance maximum de 12,5 mm, dans la position neutre du corps de piston.

11. Système de direction selon l'une quelconque des revendications précédentes, **caractérisé en ce que** le corps de piston comprend un joint d'étanchéité (12) et **en ce que** les extrémités de la conduite de dérivation s'ouvrent dans les chambres de cylindre respectives des moyens de cylindre d'actionnement de chaque côté du joint d'étanchéité à une distance maximale de 50 mm, encore de préférence au maximum de 25 mm, l'une par rapport à l'autre dans la position neutre du corps de piston.

12. Système de direction selon l'une quelconque des revendications précédentes, **caractérisé en ce que** l'on prévoit un seul cylindre d'actionnement.

13. Combinaison composée d'un véhicule de remorquage et d'un véhicule remorqué, **caractérisée en ce que** la combinaison est fournie avec un système de direction selon l'une quelconque des revendications précédentes.

14. Combinaison selon la revendication 13, **caractérisée en ce que** les moyens de cylindre d'actionnement sont prévus avec une tige de piston et le véhicule de remorquage est raccordé à l'un parmi la tige de piston et le logement de cylindre des moyens de cylindre d'actionnement et le véhicule remorqué est raccordé à l'autre parmi la tige de piston et le logement de cylindre des moyens de cylindre d'actionnement.
